# EUROPEAN PATENT APPLICATION

(11) **EP 3 926 251 A1**
(43) Date of publication of application: **22.12.2021**
(21) Application number: 20382523.7
(22) Date of filing: 17.06.2020
(51) Int. Cl.: F24S 30/425, F24S 50/20, H02S 20/32

(54) **METHOD AND SYSTEM FOR CONTROLLING A HORIZONTAL SINGLE AXIS SOLAR TRACKER**

(71) Applicant: Soltec Innovations, S.L., 30500 Molina de Segura (ES)
(72) Inventor: Teruel Hernández, José Alfonso, 30500 Molina de Segura (ES)
(74) Representative: Isern Patentes y Marcas S.L.

(57) **Abstract**

The invention relates to single axis solar trackers moving solar panels and being controlled by a solar tracker controller. The object of the invention tackles the problem of torque distribution in horizontal single axis solar trackers, in order to distribute the torque along the axis or torque tube, the object of the invention provides a method and a system comprising a plurality of controllers arranged along the horizontal axis, said controllers being associated to actuators intended to operate on the angular position of the torque tube. The controllers are operated in dual role basis, such that a controller acting as master controller performs the calculations of the rotational movements to be induced by the actuators associated to the slave controllers.

## Description

### OBJECT OF THE INVENTION

The invention relates to the technical field of renewable energies and more particularly to solar energy.

The object of the invention is directed to managing and controlling a group of horizontal single axis solar trackers. More particularly, the present invention relates to actuation of solar trackers.

### BACKGROUND ART

Solar trackers aim solar panels or modules towards the sun as the sun moves across the sky. These devices change direction during the day to follow the path of the sun and maximize energy harvesting. In photovoltaic systems, trackers help minimize the angle of incidence (the angle that a beam of light forms with a line perpendicular to the surface) between the incident light and the panel. This significantly increases the amount of energy that the panels produce. In particular, single axis solar trackers rotate solar modules around a single axis. There are several types of single axis trackers, including horizontal, vertical, inclined and polar trackers, each of which supports panels that rotate around a single axis.

While uniaxial solar trackers effectively reduce the angle of incidence throughout the movement of the sun, there are cost issues. It is desirable to reduce the cost of energy generated by solar panels so that it is economically efficient. One of the main costs of generating solar energy is the equipment used. Photovoltaic modules are constantly being developed to increase performance, reduce costs and make them cheaper. Furthermore, support structures in a uniaxial tracking system contribute to these costs.

US20180226915 discloses a distributed torque, single axis solar tracking system comprising a plurality of spaced apart mounting posts with selected posts having an electrically controlled actuator mounted thereon. A torque structure extends between the actuators to distribute rotational torque on the torque structure whilst a plurality of solar panels is connected to the torque structure. Electrical apparatus is coupled to each actuator and designed to be coupled to a power source so that when the electrical apparatus is coupled to the power source, the plurality of actuators is energized to rotate simultaneously a desired amount. Whereby the plurality of solar panels is rotated the desired amount as the plurality of actuators rotates. But It is characterized because several motors and actuators are provided respectively arranged along several posts and acting on a shared structure, moving the same axis of rotation, namely the torque tube.

US8453328 describes methods and devices for assembling a terrestrial solar tracking photovoltaic array. The methods described include securing a torque tube to an alignment fixture by positioning a flange at an end of the torque tube over a shelf on the alignment fixture and positioning a section of the torque tube inward from the flange into a receptacle on the shelf of the alignment fixture. The method may include aligning and mounting a mount to the torque tube at a point along the torque tube inward from the end of the torque tube. The method may include aligning and mounting a solar cell module to the mount with the solar cell module including an array of lenses positioned over a set of corresponding receivers that include one or more III-V compound semiconductor solar cells. The method may include removing the torque tube from the alignment fixture after the solar cell module is mounted to the mount. The method may include aligning and mounting the torque tube to an end of a longitudinal support with the torque tube being coaxial with the longitudinal support and the solar cell module being able to rotate with the torque tube about a first axis that extends through the torque tube and the longitudinal support and a second axis perpendicular to the first axis.

Therefore, it would be highly advantageous to remedy the above and other deficiencies inherent in the systems known in the art mainly based on methodologies providing a single controller connected to and acting on a plurality of motors arranged along a common structure, the aforementioned torque tube. Accordingly, it is an object of the present invention to provide a new and improved uniaxial distributed torque solar tracking system.

### SUMMARY OF THE INVENTION

The present invention discloses a method and a system based on a shared common torque tube being the structure to which the motors steering the tracker are arranged, being the former associated to respective controllers properly arranged along the structure.

In the light of the above, one of the main advantages of the invention is therefore provided by the deployment of a plurality of controllers respectively arranged along the common structure of a solar tracker, the tube defining the shaft of the single axis solar tracker system. The controllers are configured according to two main roles, master and slave, in such a way that the master controller is connected to the slave controller/s and vice-versa, using wireless communication means or using a wired interconnection system allowing the flow of data between the controllers. Same communications means are intended for stablishing communication channels between controllers, regardless of their respective roles.

Said data communication allows the controllers to share data between slaves and the master, so when a controller obtains an angle measurement the measured angle is transmitted to the master controller in a wired or wireless manner.

The object of the invention solves the problem of torque distribution throughout the entire length of the torque tube structure of solar tracker by means of multiple actuators distributed throughout the structure. The main advantage of the object of the invention is that it allows the average torque throughout the entire structure of the solar tracker to be minimal by having angular measurements distributed along the axis of rotation and with independent distributed actuators.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1.- Shows a diagram illustrating the control flow for one master tracker and two slaves operating for an alternate movement.
Figure 2.- Shows a graph depicting the object of the invention operating for an alternate movement from 0° to 2°.
Figure 3.- Shows a flow diagram where a main loop is exemplified showing the six concurrent tasks.
Figure 4.- Shows a flow diagram of the solar calculations task procedure.
Figure 5.- Shows a flow diagram communications check task procedure.
Figure 6.- Shows a flow diagram of the battery test task procedure.
Figure 7.- Shows a flow diagram self-diagnostic test procedure.
Figure 8.- Shows a flow diagram sync-check task procedure.

### DETAILED DESCRIPTION

The object of the invention is directed to single axis horizontal trackers deployed on a solar plant, which in a preferred embodiment of the invention is operated by a plurality of actuators, preferably electric actuators, so that torque is distributed along the same axis of rotation, namely a torque tube. In a preferred embodiment of the invention said distribution is even and uniform; nevertheless, a non-uniform distribution may be envisaged in alternative embodiments of the invention where an uneven torque distribution is required.

The object of the invention also encompasses an aspect directed to a system for controlling a horizontal single axis solar tracker, said system comprising interconnected controllers respectively associated to electric actuators as the one represented in figure 9a, allowing a precise angular measurement at each of the points where the electric actuators are located, reducing angular error and even controlling said angular error in some cases where it is convenient that it is greater than zero. This achieves optimal timing governed by the master controller in such a way that a roll or roll angle is the tracker rotation angle, the current roll or current roll angle is the solar tracker angle of rotation measured with the internal inclinometer at a certain moment (current) whereas the target roll or target roll angle is the target rotation angle for the solar tracker.

One aspect of the invention is directed to a method of controlling horizontal tracker of an axis driven by multiple actuators so that these are distributed the torque of the same axis of rotation (or torque tube). A second aspect of the invention is directed to a solar tracker system comprising a distributed plurality of controllers jointly and respectively associated to electrical actuators, providing an accurate angular measurement at each of the points where the electrical actuators are arranged, thus minimizing angular error or even regulating said error in some cases where an error value greater than zero is required; all of this providing an optimal synchronization preferably governed by one the controllers acting as a master controller.

In a preferred embodiment of the invention, the controllers may all be identical at hardware and software levels but being configured as master/slave controllers, hence acting according two different roles. A master controller is meant to calculate a target roll angle consequently operating on the associated actuator, whereas a slave controller is meant to receive data related to the target roll angle calculated by the master controller, subsequently operating on the associated actuators thereof; besides, slave controllers may measure angular position of the torque tube at the position where said slave controller is arranged at the torque tube, sending to the master controller said angular position of the torque tube at the position where the slave controller is arranged at the torque tube.

This means that each solar tracker controller is equipped with its own power supply, batteries and the solar tracker controller electronics comprising communication means stablishing wired (i.e. serial data transmission means based on RS-485/ EIA-485) or wireless communications between controllers arranged at the same solar tracker. In alternative embodiments of the invention, the controllers may differ at hardware/software level so the master controller may be equipped with power supply and, eventually a battery backup, whereas slave controllers are equipped with controller electronics fed on a single power supply as represented in figure 9b.

In yet an alternative embodiment of the object of the invention represented in figure 9c, the system may comprise dummy controllers that would not operate on any actuator but would communicate with the rest of the controllers and with the master controller. These dummy controllers will be placed distributed along the structure, for example but not limited to, they may be arranged at the ends of the torque tube (north and south ends), so the respective rolls at those locations can be measured. This information may allow other controllers associated with their respective actuators to execute rotational motion to reach the target roll of the torque tube minimizing the average torque throughout the entire structure of the torque tube defining the axis of the solar tracker, making the structure more steady and robust against wind loads.

During the start-up of a solar tracker with multiple actuators and controllers, the above-mentioned roles must be configured, besides a roll angle must be calibrated according to measurements imposed by the master controller.

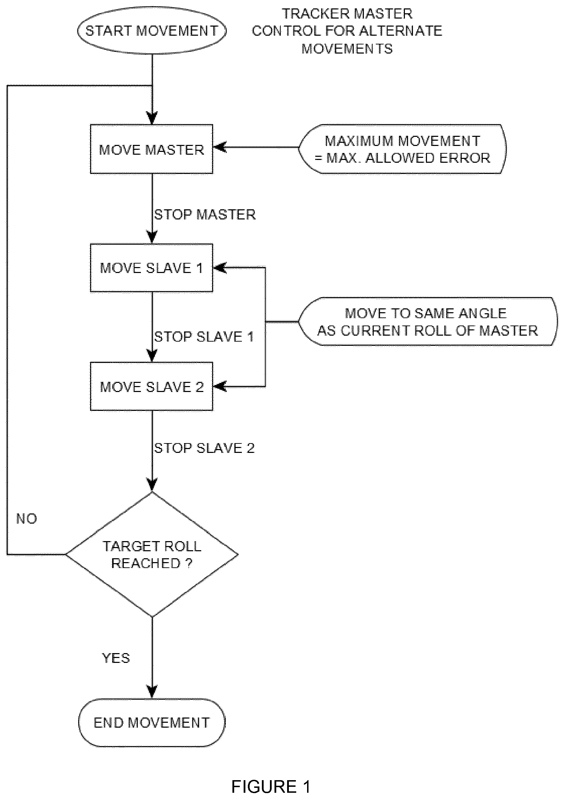

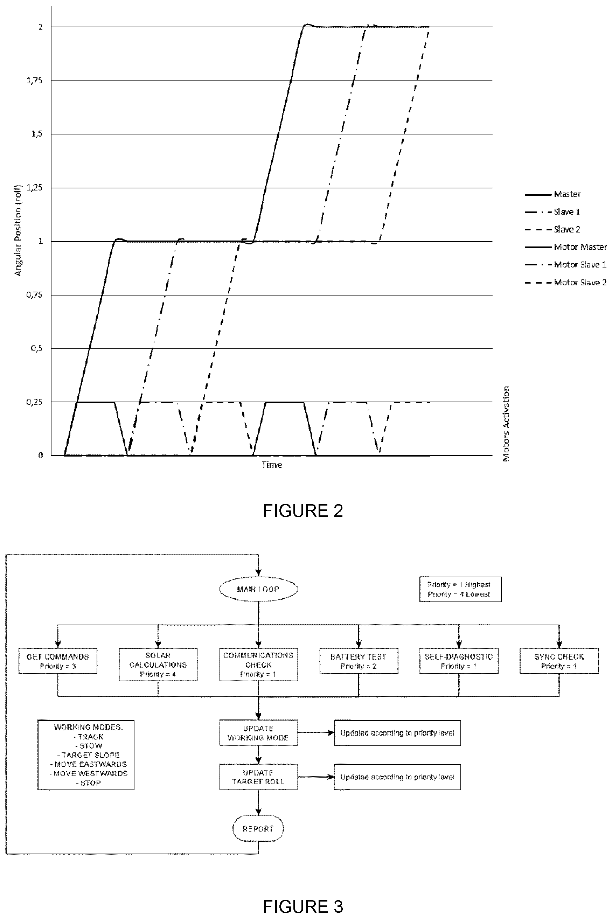

To limit peak power consumption, coming from a single battery bank or power supply per solar tracker, which is preferably located associated to the master controller, required movements may be accomplished by alternating asynchronous actuators, movements do not match in time. Hence, in view of figure 1, a rotational motion or roll of the torque tube is meant to be initiated by the master controller until reaching a maximum roll angle difference or deviation allowed between actuators preferably set at a value comprised around 1° and 2° but never more than 15°, when the master controller stops, a first slave controller (slave 1) starts the movement until matching the target roll angle, the same roll as the master controller, once a target roll angle is reached, a second slave controller (slave 2) replicates the process followed by the first slave (slave 1). Figure 2 depicts this procedure for an alternate movement from 0° to 2°, it can be appreciated from said figure how the master controller performs a movement from 0° to 1° by means of the associated actuator leading to a maximum error roll angle value allowed between actuators set at X° in this preferred non limiting embodiment; then the slave controllers sequentially reciprocate said movement from 0° to 1°, then again the master controller performs a movement from 1° to 2° by means of the associated actuator, the maximum error roll angle value allowed between actuators remains X°, then the slave controllers sequentially reciprocate said movement from 1° to 2°.

The method of the invention is based on a control procedure following the diagram depicted on Figure 3 wherein a main loop is executed said main loop being there are six concurrent tasks which can modify the working mode and the role of the solar trackers. The final assignment will depend on the priority of each tasks, being 1 the highest priority level and 4 the lowest.

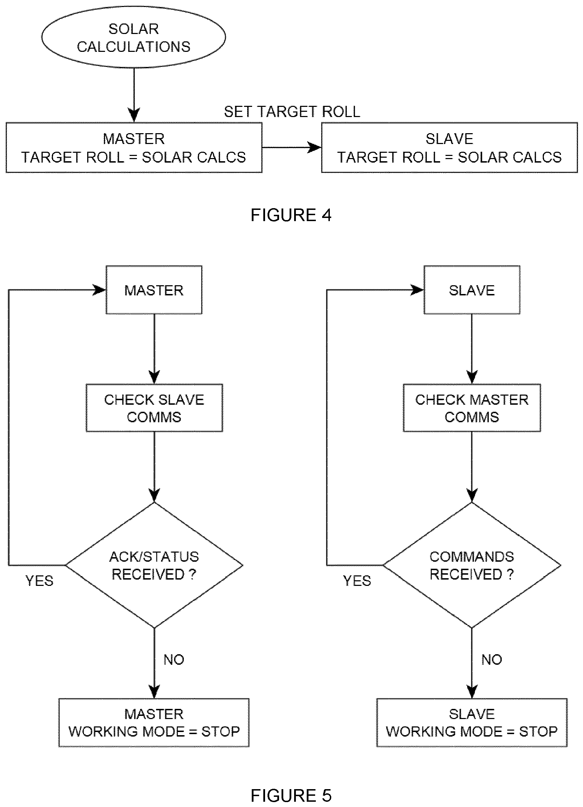

The solar calculations task shown in figure 4 performs all the required operations for calculating sun positions based on the location of the solar plant and a time stamp providing date and time. From said data related to the solar position, a target roll movement, hereinafter target roll, for the single axis solar tracker is then calculated.

A communications check task as the one depicted in figure 5 is performed by waiting, for a certain time period, for a reply message from either the master or the slave controller. If the time exceeds a timeout value, communications are deemed to be down.

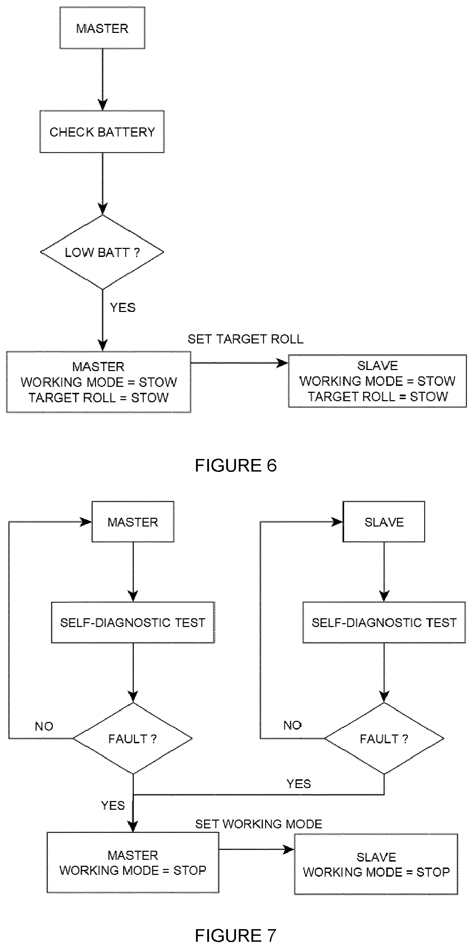

A battery test task as the one depicted in figure 6 is performed to check battery charge levels to checker the battery charge level is too low to continue working safely or not. Should the battery state of charge deemed to be under a certain safe value, then the solar tracker is set to go to a stow position (safe position) and wait until battery charge level recovers to a battery charge level sufficient to continue working safely, the aforementioned safe value. Hence, should the check render a situation where a stow position is required, the target roll would be that of the solar tracker being set to stow position and the controllers would be indicated accordingly.

A self-diagnostic test as the one depicted in figure 7 is directed to check the solar tracker controller internal functions, performing the following assessments: internal communications between main microcontroller and peripheral units (I2C, SPI, UART), physical magnitudes measurements comprising voltage and current measurements, motor movement, etc. All these tests are critical and in case of failure the solar tracker controller is stopped, and a report is produced.

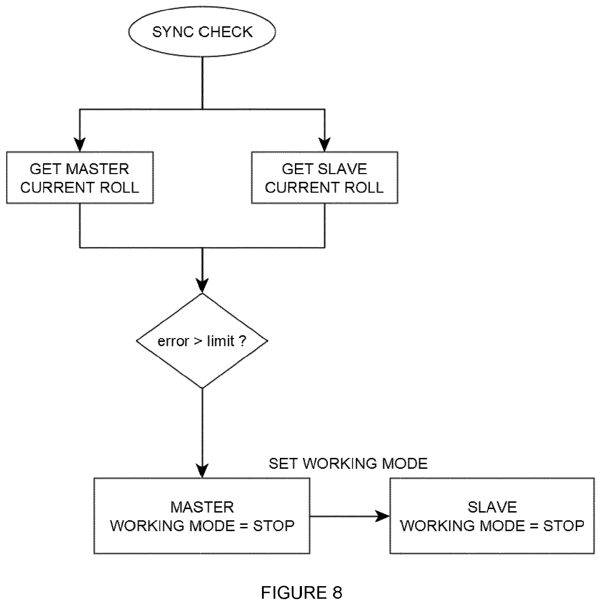

A sync-check task as the one depicted in figure 8 is direct to check the angular movements, the roll movement, at the master controller and one of the slave controllers points of measurement comparing them. Should the aforementioned comparison yield a maximum error exceeding a preestablished threshold stablished limit value, then the controllers involved in the aforementioned comparison are set to stop.

## Claims

1. A method for controlling a horizontal single axis solar tracker comprising a plurality of interconnected solar tracker controllers said controllers being respectively associated to actuators and being arranged along a torque tube to produce a roll movement of the torque tube, the method being **characterised by**:
a. setting:
- one of the solar tracker controllers as a master controller, and
- any remaining solar tracker controller as slave controller,
b. each slave controller measuring roll angle of the torque tube at each of the points where the associated actuator is located along the torque tube,
c. the master controller receiving said measured angular position corresponding to a current roll from the slave controller and calculating a target roll for the torque tube; said calculation being based on said measured angular position from the slave controller and sun position data for the location of the solar plant in addition to date and time data, and
d. the master controller commanding a movement to the slave controller so that a roll movement is produced by the actuator associated to said slave controller acting on the torque tube, said roll movement being performed to reach the target roll calculated by the master controller.

2. The method according to claim 1, wherein the master controller performs a movement by means of the associated actuator said movement leading to a maximum roll angle difference allowed between actuators, the method comprising the slave controllers sequentially reciprocating said movement.

3. The method according to claim 1, further comprising arranging dummy controllers configured not to operate on any actuator but to measure angular position of the torque tube at the position and communicate with the rest of the slave controllers and with the master controller.

4. The method according to claim 3, wherein the dummy controllers are respectively arranged at both ends of the axis.

5. The method according to claim 1, wherein the movement commanded by the master controller is that of a maximum roll angle difference allowed between actuators.

6. The method according to claim 5, wherein the maximum roll angle difference allowed between actuators is about 15°.

7. System for controlling a horizontal single axis solar tracker **characterised by** comprising a plurality of interconnected solar tracker controllers furnished with communication means and associated to actuators arranged along the single axis to produce a roll movement.

8. The system for controlling a horizontal single axis solar tracker of claim 7, wherein the solar tracker controllers comprise a master controller and slave controllers, being:
a. the slave controllers configured to measure angular position of the torque tube at the position of the associated actuator, and
b. the master controller configured to calculate a target roll angle from said measure angular position.

9. The system for controlling a horizontal single axis solar tracker of claim 7, further comprising dummy controllers said dummy controllers being configured in such a way that they t do not operate on any actuator.

10. The system for controlling a horizontal single axis solar tracker of claim 7, wherein the dummy controllers arranged at both ends of the axis.

11. The system for controlling a horizontal single axis solar tracker of any one of claims 7 to 10 wherein the communication means are selected from wireless communication means and serial data transmission means.

12. The system for controlling a horizontal single axis solar tracker of any one of claims 7 to 11 wherein the solar tracker controllers are configured to carry out the method of any one of claims 1 to 6.

13. The system for controlling a horizontal single axis solar tracker of claim 11 wherein the controllers are interconnected using wireless connections.

14. The system for controlling a horizontal single axis solar tracker of claim 11 wherein the controllers are interconnected using wired connections.

15. The system for controlling a horizontal single axis solar tracker of claim 14 wherein the wired connections are based on RS-485/ EIA-485 serial data transmission.
